# EUROPÄISCHE PATENTSCHRIFT

(11) **EP 1 620 753 B1**
(45) Veröffentlichungstag und Bekanntmachung des Hinweises auf die Patenterteilung: **14.05.2008**
(21) Anmeldenummer: 04724537.8
(22) Anmeldetag: 31.03.2004
(51) Int. Cl.: G02B 6/00, G09G 3/34, G09F 13/04

(54) **VERFAHREN ZUR HERSTELLUNG EINER BELEUCHTUNGSVORRICHTUNG UND BELEUCHTUNGSVORRICHTUNG**
METHOD FOR THE PRODUCTION OF AN ILLUMINATION DEVICE AND ILLUMINATION DEVICE
PROCEDE DE FABRICATION D'UN DISPOSITIF D'ECLAIRAGE ET DISPOSITIF D'ECLAIRAGE

(30) Priorität: 31.03.2003 DE 10314525
(43) Veröffentlichungstag der Anmeldung: 01.02.2006
(60) Teilanmeldung: 07015791.2
(73) Patentinhaber: OSRAM Opto Semiconductors GmbH, 93055 Regensburg (DE)
(72) Erfinder: BEIL, Jürgen, 92331 Parsberg (DE); LEX, Wolfgang, 93092 Barbing (DE); STICH, Andreas, 93059 Regensburg (DE)
(74) Vertreter: Epping - Hermann - Fischer
(86) Internationale Anmeldenummer: PCT/DE2004/000670
(87) Internationale Veröffentlichungsnummer: WO 2004/088372

(56) Entgegenhaltungen:
- WO-A1-02/42809
- GB-A- 2 376 287
- US-A- 5 592 193
- US-A1- 2001 004 317
- PATENT ABSTRACTS OF JAPAN Bd. 0145, Nr. 77 (P-1146) 21 Dezember 1990 & JP 02 247 687 A (MATSUSHITA ELECTRIC WORKS LTD) 03 Oktober 1990

## Beschreibung

Die Erfindung betrifft ein Verfahren zur Herstellung einer Beleuchtungsvorrichtung gemäß dem Oberbegriff des Patentanspruchs 1 und eine Beleuchtungsvorrichtung gemäß dem Oberbegriff des Patentanspruchs 11.

Displays beispielsweise für Monitore müssen bei Verwendung von Flüssigkristallanzeigen, die selbst nicht leuchten, hinterleuchtet werden. Dafür werden üblicherweise Kaltkathodenlampen oder im Rahmen der Miniaturisierung und der Herstellung von Flachbildschirmen flächige Lichtleiter eingesetzt. Flächige Lichtleiter als Leuchtflächen bestehen meist aus Glas und werden an den Seitenflächen mit Licht, beispielsweise durch lichtemittierende Dioden (LEDs) versorgt. Vor allem ab Display- und damit Leuchtflächengrößen von einer Bildschirmdiagonalen mit einer Länge von 17" tritt das Problem auf, daß eine homogene Ausleuchtung der gesamten Fläche nicht oder kaum mehr möglich ist. Es tritt vor allem in der Displaymitte eine schwächere Ausleuchtung als im übrigen Bildschirm auf. Weiterhin ist es mit herkömmlichen Produktionseinrichtungen für Beleuchtungsvorrichtungen aufwendig, Beleuchtungsvorrichtungen verschiedener Größen herzustellen. Die Herstellung flächiger Beleuchtungsvorrichtungen ist mit steigender Größe eine weitere Schwierigkeit.

US 5 592 193 offenbart eine Beleuchtungsvorrichtung eines Displays mit einer vieleckigen Leuchtfläche, wobei die Leuchtfläche bausteinartig aus einzelnen vieleckigen Leuchtmodulen zusammengesetzt ist.

Der Erfindung liegt die Aufgabe zugrunde, ein Verfahren zur Verfügung zu stellen, das es ermöglicht, eine Beleuchtungsvorrichtung herzustellen, die die genannten Nachteile des Stands der Technik überwindet. Insbesondere soll ermöglicht werden, ein Verfahren zur Herstellung einer Beleuchtungsvorrichtung zur Verfügung zu stellen, mit der Bildschirme mit einer Bildschirmdiagonale von über 17" sehr homogen ausgeleuchtet werden können und mit dem Beleuchtungsvorrichtungen unterschiedlicher Größe flexibel hergestellt werden können. Die leichte Herstellbarkeit großflächiger Beleuchtungsvorrichtungen ist eine weitere Aufgabe.

Aufgabe ist es weiterhin, eine derartige Beleuchtungsvorrichtung zur Verfügung zu stellen.

Diese Aufgaben werden durch ein Verfahren mit den Merkmalen des Anspruchs 1 und durch eine Beleuchtungsvorrichtung mit den Merkmalen des Anspruchs 11 gelöst.

Vorteilhafte Weiterbildungen des Verfahrens bzw. der Beleuchtungsvorrichtung sind in den Unteransprüchen 2 bis 10 bzw. 12 bis 20 angegeben.

Bei einem erfindungsgemäßen Verfahren zur Herstellung einer Beleuchtungsvorrichtung wird eine vieleckige Leuchtfläche, insbesondere eine Hinterleuchtungsvorrichtung eines Displays, bausteinartig aus mehreren einzelnen vieleckigen Leuchtmodulen zusammengesetzt. Durch eine Kombination mehrer Leuchtmodule gleicher oder unterschiedlicher Größe können Hinterleuchtungen für eine Vielzahl von Displaygrößen realisiert werden.

Weiterhin ist bei dem erfindungsgemäßen Verfahren ein Leuchtkörper des Leuchtmoduls vorgesehen, dessen Querschnitt sich mit zunehmendem Abstand vom Lichteinkoppelteil verjüngt.Vorzugsweise sind die einzelnen Leuchtmodule derartig ausgebildet, dass die Dicke des Leuchtkörpers benachbart zum Lichteinfkoppelteil größer als die Dicke des Lichteinkppelteils ist. Dadurch ergibt sich eine Stufe zwischen Lichteinkoppelteil und Lichtaustrittsfläche des Leuchtmoduls, in die ein benachbartes Leuchtmodul eingreifen kann, sodass die Leuchtmodule beim Zusammensetzen zu einer Leuchtfläche so überlappen können, dass Lichteinkoppelteile, die sich unterhalb der Leuchtfläche befinden, abgedeckt sind.

Bei einem besonders bevorzugten Verfahren zur Herstellung einer Beleuchtungsvorrichtung wird eine rechteckige Leuchtfläche, bausteinartig aus mehreren einzelnen rechteckigen Leuchtmodulen zusammengesetzt.

In einer bevorzugten Variante werden die Leuchtmodule aus einem Basissatz von unterschiedlich großen, vorzugsweise rechteckigen Leuchtmodulen ausgewählt. Eine solcher Basissatz enthält sozusagen einen Grundbausatz mit Leuchtmodulen einer begrenzten Anzahl unterschiedlicher Größen. Dadurch kann eine Vielzahl verschieden großer Beleuchtungsvorrichtungen mit Leuchtmodulen desselben Basissatzes zusammengesetzt werden. Dies erleichtert eine flexible Fertigung bei geringen Kosten.

Für den Fall, daß eine nicht rechteckige Leuchtfläche geschaffen werden soll, ist es selbstverständlich auch möglich, Leuchtmodule einer anderen Geometrie zu wählen, beispielsweise Leuchtmodule in Form eines nicht rechtwinkligen Parallelogramms. Mit dieser speziellen Form von Leuchtmodulen ließe sich beispielsweise ein Display in Form eines nicht rechtwinkligen Parallelogramms hinterleuchten.

In einer besonders bevorzugten Variante des Verfahrens weisen zumindest einige der mehreren Leuchtmodule ein Lichteinkoppelteil mit lichtemittierenden Dioden (LEDs) auf. Im Gegensatz zu einer herkömmlichen Beleuchtungsvorrichtung, die aus einer einzigen Leuchtplatte besteht, kann mit der Erfindung über die gesamte Beleuchtungsvorrichtung eine homogenere Verteilung der Verlustleistung und damit der entstehenden Wärme erzielt werden, da die LEDs nicht nur am Rand der Leuchtfläche, sondern auch innerhalb der Leuchtfläche am Übergang zwischen einzelnen Leuchtmodulen angeordnet sind. Das Lichteinkoppelteil ist derartig ausgebildet, daß die Lichtstrahlen vor Eintritt in den Leuchtkörper, dessen Oberseits durch die Lichtaustrittsfläche begrenzt ist, innerhalb des Lichteinkoppelteils eine gewisse Strecke durchlaufen, in der eine Strahlungshomogenisierung stattfindet. Die Fläche des Lichteinkoppelteils gehört dabei nicht zu der Lichtaustrittsfläche, deren Größe im Fall der ersten und zweiten Leuchtmodule mit Hilfe ihrer Diagonalenlänge bezeichnet wird.

Auch andere, vorzugsweise stabförmige Lichtquellen, beispielsweise Kaltkathodenlampen wie CCFLs (Cold Cathode Fluorecent Lamp) oder Neonröhren, können im Rahmen der Erfindung im Lichteinkoppelteil vorgesehen sein. Weitergehend können hier auch organische Lichtquellen wie OLEDs oder elektrolumineszierende Folien verwendet werden.

In einer bevorzugten Variante des Verfahrens umfaßt der Basissatz ein erstes Leuchtmodul einer ersten Größe, ein zweites Leuchtmodul einer zweiten Größe, ein drittes Leuchtmodul, dessen Länge der Länge des ersten Leuchtmoduls (11) und dessen Breite der Breite des zweiten Leuchtmoduls (21) entspricht, und ein viertes Leuchtmodul, dessen Länge der Breite des ersten Leuchtmoduls (11) und dessen Breite der Länge des zweiten Leuchtmoduls (21) entspricht.

In einer besonders bevorzugten Variante des Verfahrens zur Herstellung einer Beleuchtungsvorrichtung mit einer rechteckigen Leuchtfläche umfaßt der Basissatz von Leuchtmodulen vier unterschiedlich große Leuchtmodule, wobei
- die Länge der Diagonalen eines ersten Leuchtmoduls ein ganzzahliges Vielfaches von einem Zoll beträgt und das Verhältnis von Länge zu Breite des Leuchtmoduls vorzugsweise 4:3 beträgt,
- die Länge der Diagonalen eines zweiten Leuchtmoduls, das kleiner als das erste Leuchtmodul ist, ein ganzzahliges Vielfaches von 1" (25.4 mm) beträgt und das Verhältnis von Länge zu Breite des Leuchtmoduls vorzugsweise 4:3 beträgt,
- die Länge eines dritten Leuchtmoduls der Länge des ersten Leuchtmoduls und die Breite des dritten Leuchtmoduls der Breite des zweiten Leuchtmoduls entspricht, und
- die Länge eines vierten Leuchtmoduls der Breite des ersten Leuchtmoduls und die Breite des vierten Leuchtmoduls der Länge des zweiten Leuchtmoduls entspricht.

Es läßt sich also eine rechteckige Leuchtfläche, deren Diagonale eine ganzzahlige Länge in Zoll (1 Zoll = 25.4 mm) gemessen besitzt, dadurch herstellen, daß entlang der Leuchtflächendiagonale ein oder mehrere erste und/oder zweite Leuchtmodule, die selbst eine Diagonale besitzen, deren Länge eine ganzzahlige Länge in Zoll aufweist, angeordnet werden, wobei sich die zwei Leuchtmodule an den Ecken berühren. Die restliche Fläche der rechteckigen Leuchtfläche wird mit weiteren aus dem Satz der ersten, zweiten, dritten und vierten ausgewählten Leuchtmodulen aufgefüllt. Mit einem sehr kleinen baukastenartigen Satz von nur vier Leuchtmodulen kann also eine Vielzahl von Beleuch-tungsvorrichtungen verschieden großer Leuchtflächen hergestellt werden.

In einer besonders bevorzugten Variante des Verfahrens beträgt die Länge der Diagonalen des ersten Leuchtmoduls 7" und die Länge der Diagonalen des zweiten Leuchtmoduls 5". Mit diesen zwei Leuchtmodulen und den sich daraus ergebenden dritten und vierten Leuchtmodulen lassen sich Beleuchtungsvorrichtungen herstellen, die für die Hinterleuchtung aller gängigen Monitorgrößen geeignet sind. In dieser bevorzugten Variante besitzt das dritte Leuchtmodul die Abmessungen 5,6" x 3" und das vierte Leuchtmodul die Abmessungen 4,2" x 4". Insbesondere lassen sich mit diesem Basissatz Beleuchtungsvorrichtungen für Monitore mit einer Bildschirmdiagonale von 15, 17 und 19" herstellen.

Als Basissatz können jedoch selbstverständlich auch Leuchtmodule mit anderen Größen, beispielsweise ein erstes Leuchtmodul und ein zweites Leuchtmodul, die die Diagonallängen 3" und 4" besitzen, verwendet werden. 4" und 5" bzw. 3" und 5" sind weitere mögliche Kombinationen. Da jedoch eine möglichst hohe mechanische Stabilität der gesamten Leuchtfläche bei gleichzeitig geringem Fertigungsaufwand erreicht werden soll, ist es von Vorteil, wenn die einzelnen Leuchtmodule nicht zu klein gewählt sind. Wird jedoch ein Basissatz von Leuchtmodulen verwendet, deren erstes bzw. zweites Leuchtmodul eine Diagonallänge besitzt, die größer als 7 bzw. 5" ist, steigt zwar die mechanische Stabilität der Gesamtleuchtfläche und sinkt der Fertigungsaufwand, insbesondere bei sehr großen Leuchtflächengrößen. Die Anzahl der möglichen, verschieden großen Leuchtflächen, die aus einem derartigen Basissatz im Rahmen der verfügbaren Displaygrößen zusammengesetzt werden kann, sinkt jedoch. Für Sonderanwendungen sind jedoch auch derartige Leuchtmodulgrößen vorstellbar.

In einer besonders bevorzugten Variante des Verfahrens weisen alle Leuchtmodule ein Lichteinkoppelteil mit lichtemittierenden Dioden auf. Dies hat den Vorteil, daß ohne größeren zusätzlichen Fertigungsaufwand hauptsächlich durch Zusammenfügen der einzelnen Leuchtmodule eine sehr homogen lichtaussendende Leuchtfläche erzielt wird.

In einem bevorzugten Verfahren sind weitgehend alle Außenflächen der Leuchtmodule, durch die im Betrieb nicht Licht hindurchtreten soll, mit einer reflektierenden Beschichtung versehen. Beschichtet sind also insbesondere die Bodenfläche, die Seitenflächen und der Teil der Oberfläche des Lichteinkoppelteils, auf dem keine LEDs aufgebracht sind. Nicht beschichtet ist die Lichtaustrittsfläche und die Lichteintrittsfläche zwischen den LEDs und dem Lichteinkoppelteil.

In einer besonders bevorzugten Variante des erfindungsgemäßen Verfahrens ist ein Leuchtkörper des Leuchtmodule vorgesehen, dessen Querschnitt sich mit zunehmendem Abstand vom Lichteinkoppelteil verjüngt. Durch das zusammenlaufen der Lichtaustrittsfläche und der Bodenfläche der Leuchtmodule zum Endbereich hin wird erreicht, daß das von den LEDs im Lichteinkoppelteil eingespeiste Licht nicht aufgrund von Totalreflexion zu einem großen Teil, ohne aus dem Leuchtmodul auszutreten, das Leuchtmodul bis zum Endbereich durchläuft. Stattdessen trägt die sich verjüngende Form der Leuchtmoduls dazu bei, daß das in den LEDs erzeugte Licht auf der gesamten Lichtaustrittsfläche der Leuchtmodule weitestgehend homogen austritt.

In einer besonders bevorzugten Variante des erfindungsgemäßen Verfahrens sind die einzelnen Leuchtmodule derartig ausgebildet, daß die Dicke des Leuchtkörpers benachbart zum Lichteinkoppelteil größer als die Dicke des Lichteinkoppelteils ist. Dadurch ergibt sich eine Stufe zwischen Lichteinkoppelteil und Lichtaustrittsfläche des Leuchtmoduls, in die ein benachbartes Leuchtmodul eingreifen kann, sodaß die Leuchtmodule beim Zusammensetzen zu einer Leuchtfläche so überlappen können, daß Lichteinkoppelteile, die sich unterhalb der Leuchtfläche befinden, abgedeckt sind. Dadurch wird erreicht, daß die Gesamtfläche der rechteckigen Leuchtfläche der Beleuchtungsvorrichtung tatsächlich der Summe der Flächen der einzelnen Leuchtmodule entspricht und die von den Lichtaustrittsflächen der einzelnen Leuchtmodule gebildete Leuchtfläche weitgehend eben ist.

In einer bevorzugten Variante des Verfahrens weist ein Leuchtmodul eine Bodenfläche, die der Lichtaustrittsfläche gegenüberliegt, eine Reflexionsstruktur auf, die im Betrieb von den LEDs ausgesandtes Licht in den Bereich der Stufe lenkt. Dadurch wird auf einfache Weise eine hinreichende Ausleuchtung im Bereich der Stufe erreicht.

Eine erfindungsgemäße Beleuchtungsvorrichtung ist so aufgebaut, wie sie sich nach dem oben beschriebenen erfindungsgemäßen verfahren ergibt. Sie setzt sich entweder aus einer Mehrzahl von einzelnen Leuchtmodulen zusammen, die aus einem kompletten Basissatz bestehen oder aus einem einzigen Typ von Leuchtmodulen. Die Leuchtmodule müssen derart zusammengesetzt sein, daß sich eine rechteckige Leuchtfläche mit einem Längen-zu-Breiten-Verhältnis von 4:3 und einer in Zoll gemessenen ganzzahligen Diagonale ergibt.

Weitere Vorteile, vorteilhafte Ausführungsformen und Weiterbildungen des Verfahrens zur Herstellung einer Bel-euchtungsvorrichtung und der Beleuchtungsvorrichtung ergeben sich aus den im folgenden in Verbindung mit den Figuren erläuternden Ausführungsbeispielen.

Es zeigen:
- Figur 1: eine schematische Darstellung einer Draufsicht einer ersten Beleuchtungsvorrichtung,
- Figur 2: eine schematische Darstellung einer Draufsicht einer zweiten Beleuchtungsvorrichtung,
- Figur 3: eine schematische Darstellung einer Draufsicht einer dritten Beleuchtungsvorrichtung,
- Figur 4: eine schematische Darstellung eines Querschnitts durch ein erstes Leuchtmodul,
- Figur 5: eine schematische Darstellung eines Querschnitts eines weiteren Leuchtmoduls.

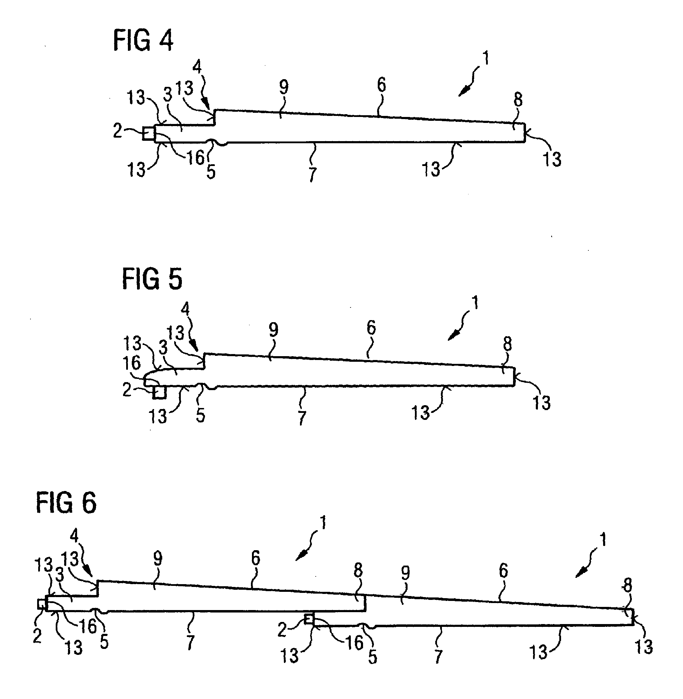

- Figur 5: eine schematische Darstellung eines Querschnitts zweier zusammengefügter Leuchtmodule.

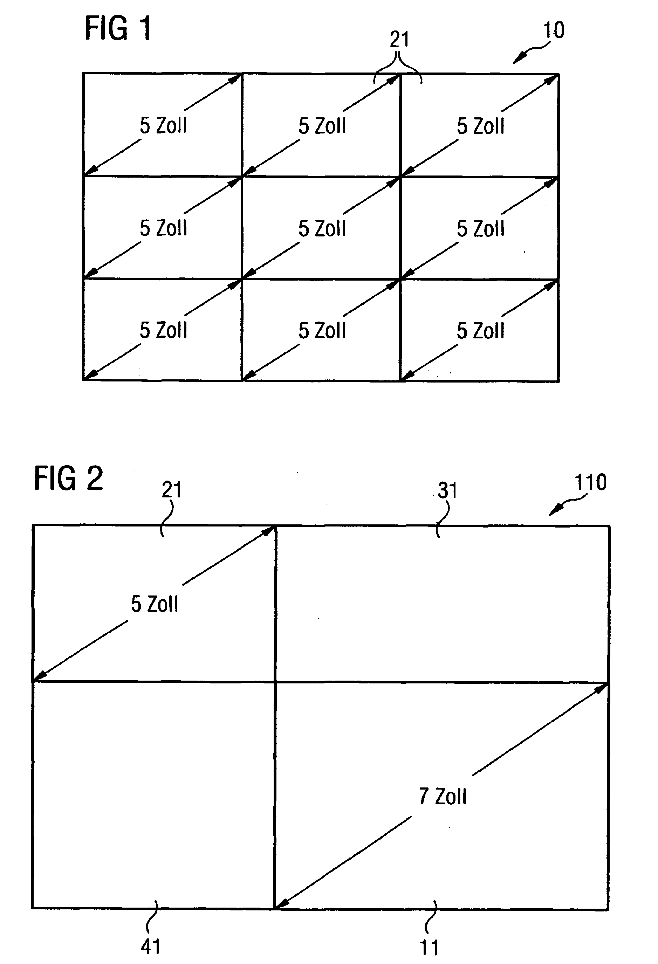

### Ausführungsbeispiel 1 (Figur 1) :

Hierbei handelt es sich um eine Beleuchtungsvorrichtung 10, die eine Mehrzahl von Leuchtmodulen 1 mit einer Diagonalenlänge von 5" aufweist. Durch das Zusammensetzen von 3 x 3 Leuchtmodulen 1 dieser Größe erhält man eine Beleuchtungsvorrichtung 10, die eine Diagonalenlänge von 15" besitzt. Bei einer herkömmlichen Leuchtplatte dieser Größe ist es schwierig, in der Mitte der Leuchtfläche eine homogene Ausleuchtung zu erzielen. Durch die Verwendung mehrerer einzelner kleinerer Leuchtmodule 1 wird erreicht, daß auf der gesamten Fläche der rechteckigen Leuchtfläche eine sehr homogene Ausleuchtung erfolgt. In diesem Ausführungsbeispiel wurde aus einem Basissatz von Leuchtmodulen ein einziger Typ 21 von Leuchtmodulen aus dem Satz 5", 7" und zugehöriger dritter und vierter Leuchtmodule ausgewählt.
Unter Verwendung eines Basissatzes mit 3"- und 4"-Leuchtmodulen als erste und zweite Leuchtmodule würde man die gleiche Beleuchtungsvorrichtung durch Zusammensetzen von fünf mal fünf 3"-Modulen erzielen.
Durch die gleiche Anzahl von Reihen und Spalten in einer Leuchtfläche liegt bei Verwendung von Leuchtmodulen mit einem Längen-zu-Breiten-Verhältnis von 4:3 und einer in Zoll gemessenen ganzzahligen Diagonale immer eine rechteckige Leuchtfläche mit einem Längen-zu-Breiten-Verhältnis von 4:3 und einer in Zoll gemessenen ganzzahligen Diagonale vor.

### Ausführungsbeispiel 2 (Figur 2) :

Hierbei handelt es sich um eine Beleuchtungsvorrichtung 110, deren Leuchtfläche aus vier verschieden großen Leuchtmodulen 11, 21, 31, 41 zusammengesetzt ist. In dieser Figur ist auch zu sehen, wie ein Basissatz definiert ist. Es berühren sich zwei Leuchtmodule 11, 21, deren Lichtaustrittsfläche bei einem Längen-zu-Breiten-Verhältnis von 4:3 eine Diagonalenlänge von 7" bzw. 5" besitzt, so an einer Ecke, daß sie einem Rechteck mit der Diagonalenlänge 12" einbeschrieben werden können. Die zwei restlichen Rechtecke 31, 41 zur Ergänzung des 12"-Rechtecks ergeben sich derart, daß die Länge des dritten Leuchtmoduls 31 der Länge des ersten Leuchtmoduls 11 und die Breite des dritten Leuchtmoduls 31 der Breite des zweiten Leuchtmoduls 21 entspricht, und die Länge des vierten Leuchtmoduls 41 der Breite des ersten Leuchtmoduls 11 und die Breite des vierten Leuchtmoduls 41 der Länge des zweiten Leuchtmoduls 21 entspricht. Es ergeben sich also für das dritte und das vierte Leuchtmodul die Maße 5,6" x 3" bzw. 4,2" x 4".

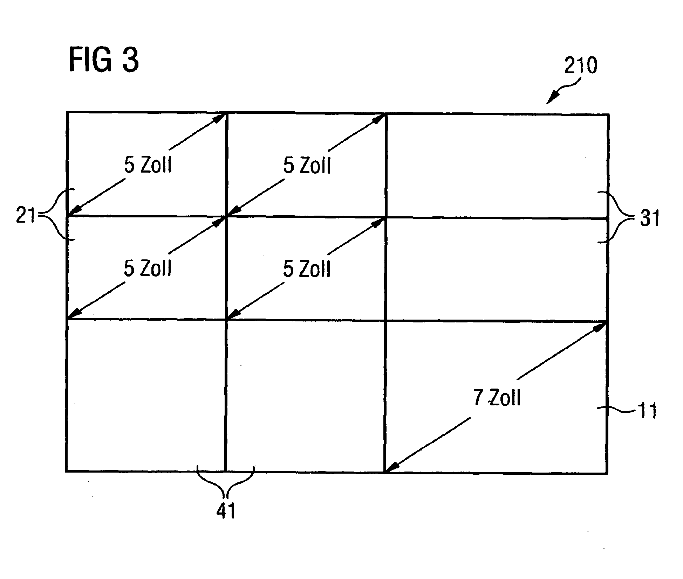

### Ausführungsbeispiel 3 (Figur 3):

Hierbei handelt es sich um eine Beleuchtungsvorrichtung 210, deren Leuchtfläche aus 9 Leuchtmodulen, die vier unterschiedlich große Leuchtmodule enthalten, zusammengesetzt ist. Es genügt derselbe Basissatz, der in Fig. 2 zu sehen ist und lediglich vier unterschiedliche Leuchtmodule 11, 21, 31, 41 enthält, um eine derartige Leuchtfläche zusammenzusetzen.
Die erzielte Diagonalenlänge von 17" entspricht handelsüblichen Bildschirmgrößen. Es können mit dem hier verwendeten Basissatz Leuchtflächen mit Diagonalenlängen von beispielsweise 10", 14", 15", 19", 20", 21" und 22" zusammengesetzt werden.

Ab einer Diagonalenlänge von 24" sind alle ganzzahligen Längen in Zoll gemessen möglich.

### Ausführungsbeispiel 4 (Figur 4) :

Hierbei handelt es sich um ein in verschiedenen Größen herstellbares Leuchtmodul 1, das mit LEDs bestückt ist, die an einer Stirnseite des Lichteinkopptelteils 3 Licht in das Leuchtmodul 1 einkoppeln. Im Lichteinkoppelteil 3 findet eine Homogenisierung des von den LEDs 2 ausgesandten Lichts statt, bevor die Strahlung in den Leuchtkörper 9 eintritt.

Durch den sich verjüngenden Querschnitt des Leuchtkörpers 9 wird gewährleistet, daß über die gesamte Lichtaustrittsfläche Licht austritt.

Alle Flächen, durch die im Gegensatz zur Lichtaustrittsfläche 6 und zur Lichteintrittsfläche 16 zwischen den LEDs und Lichteinkoppelteil Licht im Betrieb kein Licht hindurchtreten muß, sind vorzugsweise mit einer reflektierenden Beschichtung 13 versehen, die ein Übersprechen zwischen den Leuchtmodulen über Seitenflächen weitgehend verhindern und verluste reduzierten.

Eine Reflexionsstruktur 5 der Bodenfläche 4 zwischen Lichteinkoppelteil 3 und Leuchtkörper 9 hilft, daß Licht durch Reflexion direkt hinter die Stufe 4 zur Lichtaustrittsfläche gelangt. Die Reflexionsstruktur kann beispielsweise wellenartig ausgeprägt sein. Geeignet ist aber auch jede andere Struktur, die hilft, eine schwächere Ausleuchtung des Leuchtkörpers im Bereich der Stufe zu vermeiden.

In Figur 4 ist zu sehen, daß der Endbereich 8 des Leuchtmoduls dieselbe Dicke aufweist wie die Höhe der Stufe 4. Dies gewährleistet eine ebene Leuchtfläche nach Zusammenfügen einer Mehrzahl einzelner Leuchtmodule, wie es beispielhaft in den Figuren 1 bis 3 zu sehen ist.

### Ausführungsbeispiel 5 (Figur 5):

Hierbei handelt es sich um ein weiteres Leuchtmodul 1. Ein wesentlicher Unterschied zu dem Leuchtmodul, das in Ausführungsbeispiel 4 beschrieben ist, liegt darin, daß das Licht über die 7 Bodenfläche des Leuchtmoduls in das Lichteinkoppelteil 3 eingekoppelt wird. Um eine Einkopplung des Lichts in das gesamte Leuchtmodul zu erzielen, ist das Lichteinkoppelteil 3 derartig ausgeprägt, daß die den LEDs gegenüberliegende Seite parabelförmig geformt ist. Das von den LEDs 2 ausgestrahlte Licht wird an dieser parabelförmigen Seite in den Leuchtkörper 9 des Leuchtmoduls 1 umgelenkt. Stufe 4 und Endbereich 8 des Leuchtmoduls besitzen wieder eine solche Höhe bzw. Dicke, daß einzelne Leuchtmodule 1, 11, 21, 31, 41 so zusammengefügt werden können, daß sich eine ebene Oberfläche der Leuchtfläche der Beleuchtungsvorrichtung ergibt.

### Ausführungsbeispiel 6 (Figur 6):

Hier wird beispielhaft gezeigt, wie zwei Leuchtmodule (1) beim Zusammensetzen zu einer Leuchtfläche so überlappen, daß das Lichteinkoppelteil 3 von dem benachbarten Leuchtmodul abgedeckt ist. Es ergibt sich eine weitgehend ebene Leuchtfläche.

Die Erfindung ist nicht durch die Beschreibung anhand der Ausführungsbeispiele, sondern durch die Ansprüche beschränkt.

Die Technik erstreckt sich weiterhin auf sämtliche Verfahren und Beleuchtungsvorrichtungen, die die prinzipiellen Merkmale der Erfindung aufweisen. Insbesondere ist sie für Beleuchtungsvorrichtungen einsetzbar, die sich nicht nach der Norm einer Flächendiagonale richten, die eine ganzzahlige Länge in Zoll gemessen besitzt. Durch vom Markt vorgegebene andere Normen von beleuchteten Gegenständen, wie z.B. Monitoren, können andere Abmessungen von Leuchtflächen, und damit einzelner Leuchtmodule notwendig sein. An dem Grundgedanken der Erfindung, einen baukastenartigen Basissatz von Leuchtmodulen zu verwenden, ändert sich dadurch nichts. Weiterhin können für die Leuchtmodule ganz andere Geometrien als Rechtecke eingesetzt werden. Hier bieten sich vor allem Dreicke und Sechsecke an. Es läßt sich mit derartigen Basissätzen eine ganze Reihe an Leuchtflächenformen und -größen erzeugen.

Es läßt sich außerdem eine Vielzahl verschiedener LEDs verwenden, die Licht in die einzelnen Leuchtmodule einkoppeln. Es lassen sich weiterhin verschiedene Helligkeiten und Farben einzelner LEDs kombinieren. Es lassen sich alle Reflektormaterialien, z.B. die herkömmlichen Reflektormaterialien, sowie verschiedene Materialien für die Leuchtkörper einsetzen.

Schließlich ist es im Rahmen der Technik vorteilhaft, aber nicht zwingend erforderlich, LEDs als Lichtquellen einzusetzen. Statt LEDs können auch andere Lichtquellen, vorzugsweise die oben genannten Lichtquellen wie beispielsweise Kaltkathodenlampen in Form von CCFLs oder Neonröhren, OLEDs oder e-lektrolumineszierende Folien vorgesehen sein.

## Patentansprüche

1. Verfahren zur Herstellung einer Beleuchtungsvorrichtung (10, 110, 210) mit einer vieleckigen Leuchtfläche, insbesondere einer Hinterleuchtungsvorrichtung eines Displays wobei die Leuchtfläche bausteinartig aus mehreren einzelnen vieleckigen Leuchtmodulen (1) zusammengesetzt wird,
**dadurch gekennzeichnet , daß**
ein Leuchtkörper (9) der Leuchtmodule (1) vorgesehen ist, dessen Querschnitt sich mit zunehmendem Abstand von einem Lichteinkoppelteil (3) verjüngt, wobei die Dicke des Leuchtkörpers benachbart zum Lichteinkoppelteil (3) größer als die Dicke des Lichteinkoppelteils ist und eine Stufe (4) zwischen dem Lichteinkoppelteil und einer Lichtaustrittsfläche derart ausgebildet ist, daß die Leuchtmodule (1) beim Zusammensetzen zu einer Leuchtfläche so überlappen, daß das Lichteinkoppelteil (3) von einem benachbarten Leuchtmodul abgedeckt ist.

2. Verfahren zur Herstellung einer Beleuchtungsvorrichtung nach Anspruch 1
**dadurch gekennzeichnet, daß**
die Leuchtfläche rechteckig ist und bausteinartig aus mehreren einzelnen rechteckigen Leuchtmodulen (1) zusammengesetzt wird.

3. Verfahren nach Anspruch 1 oder 2,
**dadurch gekennzeichnet, daß**
die Leuchtmodule (1) aus einem Basissatz von unterschiedlich großen Leuchtmodulen ausgewählt werden.

4. Verfahren nach einem der Ansprüche 1 bis 3,
**dadurch gekennzeichnet, daß**
zumindest einige der mehreren Leuchtmodule (1) ein Lichteinkoppelteil (3) mit lichtemittierenden Dioden (LEDs) (2) aufweisen.

5. Verfahren nach Anspruch 3 oder 4,
**dadurch gekennzeichnet, daß**
der Basissatz umfaßt:
ein erstes Leuchtmodul einer ersten Größe, ein zweites Leuchtmodul einer zweiten Größe, ein drittes Leuchtmodul, dessen Länge der Länge des ersten Leuchtmoduls (11) und dessen Breite der Breite des zweiten Leuchtmoduls (21) entspricht, und ein viertes Leuchtmodul, dessen Länge der Breite des ersten Leuchtmoduls (11) und dessen Breite der Länge des zweiten Leuchtmoduls (21) entspricht.

6. Verfahren nach einem der Ansprüche 3 bis 5,
**dadurch gekennzeichnet, daß**
der Basissatz von Leuchtmodulen vier unterschiedlich große Leuchtmodule (11, 21, 31, 41) umfaßt, wobei
- die Länge der Diagonalen eines ersten Leuchtmoduls (11) ein ganzzahliges Vielfaches von 1 Zoll beträgt und das Verhältnis von Länge zu Breite des Leuchtmoduls vorzugsweise 4:3 beträgt,
- die Länge der Diagonalen eines zweiten Leuchtmoduls (21), das kleiner als das erste Leuchtmodul ist, ein ganzzahliges Vielfaches von 1 Zoll (25.4 mm) beträgt und das Verhältnis von Länge zu Breite des Leuchtmoduls vorzugsweise 4:3 beträgt,
- die Länge eines dritten Leuchtmoduls (31) der Länge des ersten Leuchtmoduls (11) und die Breite des dritten Leuchtmoduls (31) der Breite des zweiten Leuchtmoduls (21) entspricht, und
- die Länge eines vierten Leuchtmoduls (41) der Breite des ersten Leuchtmoduls (11) und die Breite des vierten Leuchtmoduls (41) der Länge des zweiten Leuchtmoduls (21) entspricht.

7. Verfahren nach Anspruch 6,
**dadurch gekennzeichnet, daß**
die Länge der Diagonalen des ersten Leuchtmoduls (11) 7 Zoll und die Länge der Diagonalen des zweiten Leuchtmoduls (21) 5 Zoll beträgt.

8. Verfahren nach einem der Ansprüche 1 bis 7,
**dadurch gekennzeichnet, daß**
alle Leuchtmodule (1) ein Lichteinkoppelteil (3) mit lichtemittierenden Dioden (LEDs) (2) aufweisen.

9. Verfahren nach einem der Ansprüche 1 bis 8,
**dadurch gekennzeichnet, daß**
Außenflächen der Leuchtmodule, die nicht eine Lichtaustrittsfläche (6) oder Lichteintrittsfläche (16) sind, zumindest teilweise mit einer reflektierenden Beschichtung (13) versehen sind.

10. Verfahren nach Anspruche 4 oder 8,
**dadurch gekennzeichnet, daß**
eine der Lichtaustrittsfläche gegenüberliegende Bodenfläche (7) eine Reflexionsstruktur aufweist, die im Betrieb von den LEDs ausgesandtes Licht in den Bereich der Stufe lenkt.

11. Beleuchtungsvorrichtung (10, 110, 210) mit einer vieleckigen Leuchtfläche, insbesondere eine Hinterleuchtungsvorrichtung eines Displays wobei die Leuchtfläche bausteinartig aus einzelnen vieleckigen Leuchtmodulen (1) zusammengesetzt ist,
**dadurch gekennzeichnet, daß**
ein Leuchtkörper (9) der Leuchtmodule (1) vorgesehen ist, dessen Querschnitt sich mit zunehmendem Abstand von einem Lichteinkoppelteil verjüngt, wobei die Dicke des Leuchtkörpers benachbart zum Lichteinkoppelteil (3) größer als die Dicke des Lichteinkoppelteils ist, wobei eine Stufe (4) zwischen dem Lichteinkoppelteil und einer Lichtaustrittsfläche derart ausgebildet ist, daß die Leuchtmodule (1) beim Zusammensetzen zu einer Leuchtfläche so überlappen, daß das Lichteinkoppelteil (3) von dem benachbarten Leuchtmodul abgedeckt ist.

12. Beleuchtungsvorrichtung nach Anspruch 11,
**dadurch gekennzeichnet, daß**
die Leuchtfläche rechteckig ist und aus einzelnen rechteckigen Leuchtmodulen (1) zusammengesetzt ist.

13. Beleuchtungsvorrichtung nach Anspruch 11 oder 12,
**dadurch gekennzeichnet, daß**
die Leuchtmodule (1) aus einem Basissatz von unterschiedlich großen Leuchtmodulen (11, 21, 31, 41) ausgewählt sind.

14. Beleuchtungsvorrichtung nach einem der Ansprüche 11 bis 13,
**dadurch gekennzeichnet, daß**
zumindest einige der mehreren Leuchtmodule (1) ein Lichteinkoppelteil (3) mit lichtemittierenden Dioden (LEDs) (2) aufweisen.

15. Beleuchtungsvorrichtung nach Anspruch 13 oder 14,
**dadurch gekennzeichnet, daß**
der Basissatz umfaßt:
ein erstes Leuchtmodul einer ersten Größe, ein zweites Leuchtmodul einer zweiten Größe, ein drittes Leuchtmodul, dessen Länge der Länge des ersten Leuchtmoduls (11) und dessen Breite der Breite des zweiten Leuchtmoduls (21) entspricht, und ein viertes Leuchtmodul, dessen Länge der Breite des ersten Leuchtmoduls (11) und dessen Breite der Länge des zweiten Leuchtmoduls (21) entspricht.

16. Beleuchtungsvorrichtung nach einem der Ansprüche 13 bis 15,
**dadurch gekennzeichnet, daß**
der Basissatz von Leuchtmodulen vier unterschiedliche große Leuchtmodule (11, 21, 31, 41) umfaßt, wobei
- die Länge der Diagonalen eines ersten Leuchtmoduls (11) ein ganzzahliges Vielfaches von 1 zoll (25.4 mm) beträgt und das Verhältnis von Länge zu Breite des Leuchtmoduls vorzugsweise 4:3 beträgt,
- die Länge der Diagonalen eines zweiten Leuchtmoduls (21), das kleiner als das erste Leuchtmodul ist, ein ganzzahli-ges Vielfaches von 1 Zoll beträgt und das Verhältnis von Länge zu Breite des Leuchtmoduls vorzugsweise 4:3 beträgt,
- die Länge eines dritten Leuchtmoduls (31) der Länge des ersten Leuchtmoduls (11) und die Breite des dritten Leuchtmoduls (31) der Breite des zweiten Leuchtmoduls (21) entspricht, und
- die Länge eines vierten Leuchtmoduls (41) der Breite des ersten Leuchtmoduls (11) und die Breite des vierten Leuchtmoduls (41) der Länge des zweiten Leuchtmoduls (21) entspricht.

17. Beleuchtungsvorrichtung nach Anspruch 16,
**dadurch gekennzeichnet, daß**
die Länge der Diagonalen des ersten Leuchtmoduls (11) 7 Zoll und die Länge der Diagonalen des zweiten Leuchtmoduls (21) 5 Zoll beträgt.

18. Beleuchtungsvorrichtung nach einem der Ansprüche 11 bis 17,
**dadurch gekennzeichnet, daß**
alle Leuchtmodule (1) ein Lichteinkoppelteil mit lichtemittierenden Dioden (LEDs) (2) aufweisen.

19. Beleuchtungsvorrichtung nach einem der Ansprüche 11 bis 18,
**dadurch gekennzeichnet, daß**
Außenflächen der Leuchtmodule, die nicht eine Lichtaustrittsfläche (6) oder Lichteintrittsfläche (16) sind, zumindest teilweise mit einer reflektierenden Beschichtung (13) versehen sind.

20. Beleuchtungsvorrichtung nach Anspruch 14 oder 18,
**dadurch gekennzeichnet, daß**
eine der Lichtaustrittsfläche gegenüberliegende Bodenfläche (7) eine Reflexionsstruktur aufweist, die im Betrieb von den LEDs ausgesandtes Licht in den Bereich der Stufe lenkt.

## Claims

1. Method for producing a lighting apparatus (10, 110, 210) with a polygonal luminous area, particularly a backlighting apparatus for a display, wherein the luminous area is put together in modular fashion from a plurality of individual polygonal luminous modules (1),
**characterized in that**
a luminous element (9) of the luminous modules (1) is provided whose cross section tapers as the distance from a light input part (3) increases, the thickness of the luminous element next to the light input part (3) being greater than the thickness of the light input part, and a step (4) between the light input part and a light exit area being in a form such that the luminous modules (1) overlap, when put together to form a luminous area, such that the light input part (3) is covered by an adjacent luminous module.

2. Method for producing a lighting apparatus according to Claim 1,
**characterized in that**
the luminous area is rectangular and is put together in modular fashion from a plurality of individual rectangular luminous modules (1).

3. Method according to Claim 1 or 2,
**characterized in that**
the luminous modules (1) are selected from a basic set of different-sized luminous modules.

4. Method according to one of Claims 1 to 3,
**characterized in that**
at least some of the plurality of luminous modules (1) have a light input part (3) with light emitting diodes (LEDs) (2).

5. Method according to Claim 3 or 4,
**characterized in that**
the basic set comprises:
a first luminous module of a first size, a second luminous module of a second size, a third luminous module, whose length corresponds to the length of the first luminous module (11) and whose width corresponds to the width of the second luminous module (21), and a fourth luminous module, whose length corresponds to the width of the first luminous module (11) and whose width corresponds to the length of the second luminous module (21) .

6. Method according to Claims 3 to 5,
**characterized in that**
the basic set of luminous modules comprises four different-sized luminous modules (11, 21, 31, 41), where
- the length of the diagonal of a first luminous module (11) is an integer multiple of 1 inch and the ratio of length to width of the luminous module is preferably 4:3,
- the length of the diagonal of a second luminous module (21), which is smaller than the first luminous module, is an integer multiple of 1 inch (25.4 mm) and the ratio of length to width of the luminous module is preferably 4:3,
- the length of a third luminous module (31) corresponds to the length of the first luminous module (11) and the width of the third luminous module (31) corresponds to the width of the second luminous module (21), and
- the length of a fourth luminous module (41) corresponds to the width of the first luminous module (11) and the width of the fourth luminous module (41) corresponds to the length of the second luminous module (21).

7. Method according to Claim 6,
**characterized in that**
the length of the diagonal of the first luminous module (11) is 7 inches and the length of the diagonal of the second luminous module (21) is 5 inches.

8. Method according to one of Claims 1 to 7,
**characterized in that**
all of the luminous modules (1) have a light input part (3) with light emitting diodes (LEDs) (2).

9. Method according to one of Claims 1 to 8,
**characterized in that**
external areas of the luminous modules which are not a light exit area (6) or a light entry area (16) are at least partly provided with a reflective coating (13).

10. Method according to Claims 4 to 8,
**characterized in that**
a base area (7) opposite the light exit area has a reflective structure which directs light emitted by the LEDs during operation into the region of the step.

11. Lighting apparatus (10, 110, 210) with a polygonal luminous area, particularly a backlighting apparatus for a display, wherein the luminous area is made up in modular fashion from individual polygonal luminous modules (1),
**characterized in that**
a luminous element (9) of the luminous modules (1) is provided whose cross section tapers as the distance from a light input part increases, the thickness of the luminous element next to the light input part (3) being greater than the thickness of the light input part, a step (4) between the light input part and a light exit area being in a form such that the luminous modules (1) overlap, when put together to form a luminous area, such that the light input part (3) is covered by the adjacent luminous module.

12. Lighting apparatus according to Claim 11,
**characterized in that**
the luminous area is rectangular and is made up of individual rectangular luminous modules (1).

13. Lighting apparatus according to Claim 11 or 12,
**characterized in that**
the luminous modules (1) are selected from a basic set of different-sized luminous modules (11, 21, 31, 41).

14. Lighting apparatus according to one of Claims 11 to 13,
**characterized in that**
at least some of the plurality of luminous modules (1) have a light input part (3) with light emitting diodes (LEDs) (2).

15. Lighting apparatus according to Claim 13 or 14,
**characterized in that**
the basic set comprises:
a first luminous module of a first size, a second luminous module of a second size, a third luminous module, whose length corresponds to the length of the first luminous module (11) and whose width corresponds to the width of the second luminous module (21), and a fourth luminous module, whose length corresponds to the width of the first luminous module (11) and whose width corresponds to the length of the second luminous module (21).

16. Lighting apparatus according to Claims 13 to 15,
**characterized in that**
the basic set of luminous modules comprises four different-sized luminous modules (11, 21, 31, 41), where
- the length of the diagonal of a first luminous module (11) is an integer multiple of 1 inch (25.4 mm) and the ratio of length to width of the luminous module is preferably 4:3,
- the length of the diagonal of a second luminous module (21), which is smaller than the first luminous module, is an integer multiple of 1 inch and the ratio of length to width of the luminous module is preferably 4:3,
- the length of a third luminous module (31) corresponds to the length of the first luminous module (11) and the width of the third luminous module (31) corresponds to the width of the second luminous module (21), and
- the length of a fourth luminous module (41) corresponds to the width of the first luminous module (11) and the width of the fourth luminous module (41) corresponds to the length of the second luminous module (21).

17. Lighting apparatus according to Claim 16,
**characterized in that**
the length of the diagonal of the first luminous module (11) is 7 inches and the length of the diagonal of the second luminous module (21) is 5 inches.

18. Lighting apparatus according to one of Claims 11 to 17,
**characterized in that**
all of the luminous modules (1) have a light input part with light emitting diodes (LEDs) (2).

19. Lighting apparatus according to one of Claims 11 to 18,
**characterized in that**
external areas of the luminous modules which are not a light exit area (6) or a light entry area (16) are at least partly provided with a reflective coating (13).

20. Lighting apparatus according to Claim 14 or 18,
**characterized in that**
a base area (7) opposite the light exit area has a reflective structure which directs light emitted by the LEDs during operation into the region of the step.

## Revendications

1. Procédé de fabrication d'un dispositif d'éclairage (10, 110, 210) qui présente une surface lumineuse polygonale, en particulier d'un dispositif d'éclairage arrière d'un écran, dans lequel la surface lumineuse est constituée de l'assemblage modulaire de différents modules lumineux polygonales (1), **caractérisé en ce que** les modules lumineux (1) présentent un corps lumineux (9) dont la section transversale se rétrécit à distance croissante d'une pièce (3) d'injection de lumière, l'épaisseur du corps lumineux au voisinage de la pièce (3) d'injection de lumière étant plus grande que l'épaisseur de la pièce d'injection de lumière et un gradin (4) étant formé entre la pièce d'injection de lumière et une surface de sortie de lumière, de telle sorte que lorsqu'ils sont assemblés pour former une surface lumineuse, les modules lumineux (1) se superposent de telle sorte que la pièce (3) d'injection de lumière soit recouverte par un module lumineux voisin.

2. Procédé de fabrication d'un dispositif d'éclairage selon la revendication 1, **caractérisé en ce que** la surface lumineuse est rectangulaire et est constituée de l'assemblage modulaire de plusieurs modules lumineux (1) rectangulaires différents.

3. Procédé selon les revendications 1 ou 2, **caractérisé en ce que** les modules lumineux (1) sont sélectionnés dans un ensemble de base constitué de modules lumineux de différentes tailles.

4. Procédé selon l'une des revendications 1 à 3,
**caractérisé en ce qu'**au moins certains des différents modules lumineux (1) présentent une pièce (3) d'injection de lumière dotée de diodes luminescentes (LED) (2).

5. Procédé selon les revendications 3 ou 4, **caractérisé en ce que** l'ensemble de base comprend un premier module lumineux d'une première taille, un deuxième module lumineux d'une deuxième taille, un troisième module lumineux dont la longueur correspond à la longueur du premier module lumineux (11) et dont la largeur correspond à la largeur du deuxième module lumineux (21) ainsi qu'un quatrième module lumineux dont la longueur correspond à la largeur du premier module lumineux (11) et dont la largeur correspond à la longueur du deuxième module lumineux (21).

6. Procédé selon l'une des revendications 3 à 5, **caractérisé en ce que** l'ensemble de base de modules lumineux comprend quatre modules lumineux (11, 21, 31, 41) de tailles différentes, dans lequel :
- la longueur de la diagonale d'un premier module lumineux (11) est un multiple entier de 1 pouce et le rapport entre la longueur et la largeur du module lumineux est de préférence de 4 : 3,
- la longueur de la diagonale d'un deuxième module lumineux (21) plus petit que le premier module lumineux est un multiple entier de 1 pouce (25,4 mm) et le rapport entre la longueur et la largeur du module lumineux est de préférence de 4 : 3,
- la longueur d'un troisième module lumineux (31) correspond à la longueur du premier module lumineux (11) et la largeur du troisième module lumineux (31) correspond à la largeur du deuxième module lumineux (21) et
- la longueur d'un quatrième module lumineux (41) correspond à la largeur du premier module lumineux (11) et la largeur du quatrième module lumineux (41) correspond à la longueur du deuxième module lumineux (21) .

7. Procédé selon la revendication 6, **caractérisé en ce que** la longueur de la diagonale du premier module lumineux (11) est de 7 pouces et la longueur de la diagonale du deuxième module lumineux (21) est de 5 pouces.

8. Procédé selon l'une des revendications 1 à 7, **caractérisé en ce que** tous les modules lumineux (1) présentent une pièce (3) d'injection de lumière dotée de diodes luminescentes (LED) (2).

9. Procédé selon l'une des revendications 1 à 8, **caractérisé en ce que** des surfaces extérieures des modules lumineux qui ne sont ni une surface (6) de sortie de lumière ni une surface (16) d'entrée de lumière sont dotées au moins partiellement d'un revêtement réfléchissant (13).

10. Procédé selon les revendications 4 à 8, **caractérisé en ce qu'**une surface de fond (7) opposée à la surface de sortie de lumière présente une structure réfléchissante qui, en fonctionnement, dévie en direction du gradin la lumière émise par les LED.

11. Dispositif d'éclairage (10, 110, 210) doté d'une surface lumineuse polygonale, en particulier dispositif d'éclairage arrière d'un écran,
la surface lumineuse étant constituée de l'assemblage modulaire de différents modules lumineux polygonales (1) **caractérisé en ce que** le module lumineux (1) présente un corps lumineux (9) dont la section transversale se rétrécit à distance croissante de la pièce d'injection de lumière, l'épaisseur du corps lumineux au voisinage de la pièce (3) d'injection de lumière étant plus grande que l'épaisseur de la pièce d'injection de lumière et un gradin (4) entre la pièce d'injection de lumière et une surface de sortie de lumière étant configuré de telle sorte que les modules lumineux (1) se superposent lorsqu'ils sont assemblés pour former une surface lumineuse de telle sorte que la pièce (3) d'injection de lumière soit recouverte par le module lumineux voisin.

12. Dispositif d'éclairage selon la revendication 11, **caractérisé en ce que** la surface lumineuse est rectangulaire et est constituée de l'assemblage de différents modules lumineux rectangulaires (1).

13. Dispositif d'éclairage selon les revendications 11 ou 12, **caractérisé en ce que** les modules lumineux (1) sont sélectionnés dans un ensemble de base constitué de modules lumineux (11, 21, 31, 41) de différentes tailles.

14. Dispositif d'éclairage selon l'une des revendications 11 à 13, **caractérisé en ce qu'**au moins certains des différents modules lumineux (1) présentent une pièce (3) d'injection de lumière dotée de diodes luminescentes (LED) (2).

15. Dispositif d'éclairage selon les revendications 13 ou 14, **caractérisé en ce que** l'ensemble de base comprend un premier module lumineux d'une première taille, un deuxième module lumineux d'une deuxième taille, un troisième module lumineux dont la longueur correspond à la longueur du premier module lumineux (11) et dont la largeur correspond à la largeur du deuxième module lumineux (21) ainsi qu'un quatrième module lumineux dont la longueur correspond à la largeur du premier module lumineux (11) et dont la largeur correspond à la longueur du deuxième module lumineux (21).

16. Dispositif d'éclairage selon l'une des revendications 13 à 15, l'ensemble de base de modules lumineux comprend quatre modules lumineux (11, 21, 31, 41) de tailles différentes, dans lequel :
- la longueur de la diagonale d'un premier module lumineux (11) est un multiple entier de 1 pouce (25,4 mm) et le rapport entre la longueur et la largeur du module lumineux est de préférence de 4 : 3,
- la longueur de la diagonale d'un deuxième module lumineux (21) plus petit que le premier module lumineux est un multiple entier de 1 pouce et le rapport entre la longueur et la largeur du module lumineux est de préférence de 4 : 3,
- la longueur d'un troisième module lumineux (31) correspond à la longueur du premier module lumineux (11) et la largeur du troisième module lumineux (31) correspond à la largeur du deuxième module lumineux (21) et
- la longueur d'un quatrième module lumineux (41) correspond à la largeur du premier module lumineux (11) et la largeur du quatrième module lumineux (41) correspond à la longueur du deuxième module lumineux (21).

17. Dispositif d'éclairage selon la revendication 16, **caractérisé en ce que** la longueur de la diagonale du premier module lumineux (11) est de 7 pouces et la longueur de la diagonale du deuxième module lumineux (21) est de 5 pouces.

18. Dispositif d'éclairage selon l'une des revendications 11 à 17, **caractérisé en ce que** tous les modules lumineux (1) présentent une pièce d'injection de lumière dotée de diodes luminescentes (LED) (2).

19. Dispositif d'éclairage selon l'une des revendications 11 à 18, **caractérisé en ce que** des surfaces extérieures des modules lumineux qui ne sont ni une surface (6) de sortie de lumière ni une surface (16) d'entrée de lumière sont dotées au moins partiellement d'un revêtement réfléchissant (13).

20. Dispositif d'éclairage selon les revendications 14 ou 18, **caractérisé en ce qu'**une surface de fond (7) opposée à la surface de sortie de lumière présente une structure réfléchissante qui, en fonctionnement, dévie en direction du gradin la lumière émise par les LED.
